# FASCICULE DE BREVET EUROPEEN

(11) **EP 2 298 609 B1**
(45) Date de publication et mention de la délivrance du brevet: **19.12.2012**
(21) Numéro de dépôt: 10174921.6
(22) Date de dépôt: 01.09.2010
(51) Int. Cl.: B60R 16/02, B60N 2/06, B60N 2/08, B60R 16/027

(54) **Système de fixation amovible et ajustable et d'électrification d'un siège de véhicule**
Bewegliche und verstellbare Befestigungssystem und Elektrifizierungssystem eines Sitzmoduls
Movable and adjustable fixing systeme and electrification of a vehicle seat

(30) Priorité: 21.09.2009 FR 0956463
(43) Date de publication de la demande: 23.03.2011
(73) Titulaire: Grupo Antolin-Ingenieria, S.A., 09080 Burgos (ES)
(72) Inventeur: Decombe, François, 42290, SORBIERS (FR); Aissou, Abdenacer, 69340, FRANCHEVILLE (FR)
(74) Mandataire: Delorme, Nicolas

(56) Documents cités:
- JP-A- 2005 047 380
- US-A- 2 681 688

## Description

La présente invention concerne un système de fixation amovible et ajustable et d'électrification d'un siège de véhicule.

Dans de nombreux véhicules, les sièges sont pourvus d'organes de fixation qui permettent à la fois le réglage de la position du siège par rapport à des glissières et l'extraction de siège. Par siège, on entend de manière générale un siège individuel ou une banquette permettant de recevoir deux ou trois passagers.

Par ailleurs, de nombreux sièges embarquent de plus des fonctions alimentées électriquement telles que motorisations d'orientation du dossier, nappe de chauffage d'assise et de dossier, témoin de présence et témoin de bouclage de ceinture de sécurité, etc...

US 2 681 688 A décrit un siège amovible avec un système de fixation selon le préambule de la revendication 1.

L'alimentation électrique d'un siège amovible et mobile sur une longue course s'avère donc complexe à réaliser.

Un but de l'invention est de proposer un système permettant de fixer un siège amovible sur les glissières tout en réalisant une connexion électrique du siège.

L'invention concerne ainsi un système de fixation amovible et ajustable d'un siège de véhicule embarquant un ou plusieurs organes électriques dans un véhicule automobile incorporant un circuit électrique, le système de fixation comprenant :
- une glissière fixée à la structure du véhicule présentant une semelle de laquelle partent deux parois latérales surmontées chacune d'une aile d'ancrage,
- un mécanisme d'ancrage comprenant au moins un verrou mobile entre une position rétractée permettant son introduction dans la glissière et pouvant être déverrouillé pour enlever le siège du véhicule.

De plus, le système comprend :
- un profilé coaxial de la glissière en matière isolante incorporant au moins une piste conductrice pouvant être reliée au circuit électrique du véhicule et
- un doigt conducteur embarqué sur un support mobile entre une position rétractée et une position de contact électrique avec une piste, le support mobile étant commandé par un verrou de sorte que l'engagement du verrou dans la glissière entraîne l'extraction du doigt pour le mettre en contact avec la piste et la rétraction du verrou entraîne la rétraction du doigt pour rompre le contact électrique avec la piste.

Selon d'autres caractéristiques indépendantes ou combinées de l'invention :
- le profilé présente une première et une deuxième pistes conductrices disposées le long de chaque paroi latérale de la glissière et, le mécanisme d'ancrage comprend un carter équipé de moyens de guidage de deux supports mobiles ayant chacun un doigt permettant de faire sortir un premier doigt d'un côté du carter pour entrer en contact avec la première piste et un second doigt pour entrer en contact avec la deuxième piste.
- le profilé peut être disposé sur la face extérieure de la glissière ou le profilé peut être disposé sur la face intérieure de la glissière selon des contraintes liées à l'architecture du véhicule,
- les moyens de guidage assurent une liaison pivot du support par rapport au carter,
- le carter comprend un pivot sur lequel est monté un support,
- au moins un verrou présente un téton qui est engagé dans une concavité pratiquée dans le support,
- le support est équipé d'un pion contre lequel s'appuie une tige embarquée sur le verrou,
- le support est poussé par un élément élastique tel qu'un ressort contre le verrou.

Pour sa bonne compréhension, l'invention est décrite en référence au dessin schématique ci annexé représentant, à titre d'exemples non limitatifs, plusieurs formes de réalisation d'un système de fixation et d'électrification selon l'invention.
Figure 1 représente en coupe transversale une première forme de réalisation du système selon l'invention ;
Figure 2 montre en coupe une glissière de réception d'un siège ;
Figure 3 montre en coupe un profilé destiné à être fixé sur une glissière ;
Figure 4 montre le profilé en perspective ;
Figures 5 à 7 représentent la connexion électrique entre le mécanisme d'ancrage du siège et une piste conductrice incorporée dans une glissière ;
Figure 8 montre une deuxième forme de réalisation d'un système selon l'invention.

Dans la description détaillée qui va suivre des figures définies ci-dessus, les mêmes éléments ou les éléments remplissant des fonctions identiques pourront conserver les mêmes références de manière à simplifier la compréhension de l'invention.

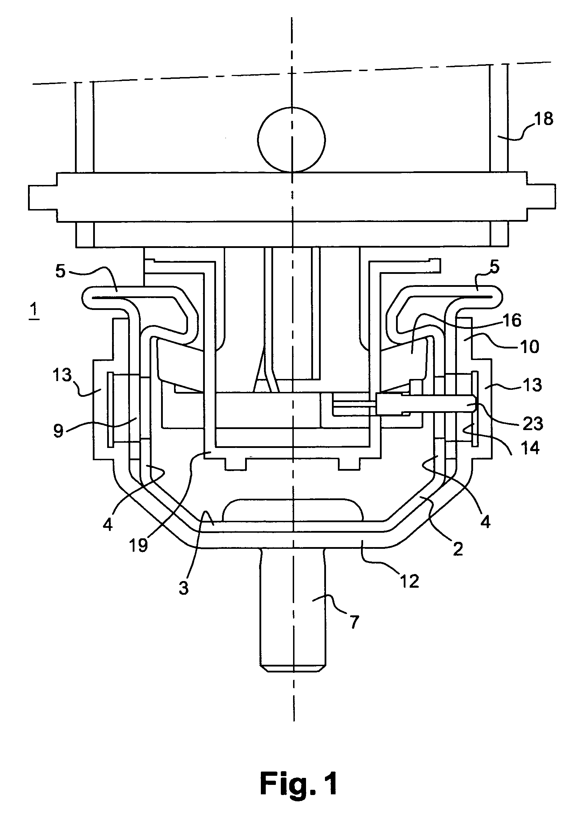

On peut se reporter tout d'abord à la figure 1 qui représente, en coupe transversale, une première forme de réalisation d'un système de fixation et d'électrification selon l'invention.

Comme on peut le voir sur cette figure, ce système comprend essentiellement deux parties. L'une est liée à la structure du véhicule, il s'agit d'une glissière fixée sur la structure du véhicule tandis que l'autre partie est embarquée sur un siège amovible, il s'agit d'un mécanisme d'ancrage qui permet le verrouillage et le déverrouillage du siège et qui permet de positionner le siège longitudinalement par rapport au véhicule. Par mécanisme d'ancrage, on entend le mécanisme embarqué dans le siège qui assure la fixation de ce dernier sur les glissières et qui assure le positionnement du siège sur les glissières.

Pour des raisons de clarté, ni la structure du véhicule, ni la structure complète du siège ne sont représentées sur les figures.

Pour sa partie qui est fixée au véhicule, le système de fixation comprend une glissière 2 qui présente sensiblement une forme de U. Cette dernière est de préférence réalisée en métal puisque c'est à la glissière 2 que revient la fonction de transmettre à la structure du véhicule les charges mécaniques subies par le siège.

Cette glissière 2 est donc essentiellement constituée d'une semelle 3 de laquelle partent deux parois latérales 4 qui sont chacune surmontée d'une aile d'ancrage 5. Les deux ailes d'ancrage 5 débordent symétriquement vers l'intérieur de la glissière 2.

Dans l'exemple représenté, la glissière 2 est réalisée à partir d'une unique tôle métallique qui est repliée pour former, respectivement, sa semelle 3, ses parois latérales et ses ailes d'ancrage. La glissière 2 peut également être réalisée par extrusion.

La semelle 3 est pourvue de perçages qui permettent le passage de rivets 7 qui assurent la fixation de la glissière 2 sur la structure du véhicule. La fixation de la glissière 2 sur la structure du véhicule peut être réalisée par d'autres moyens appropriés tels que par soudage, par emboîture mécanique etc.

On note également que les parois latérales de la glissière 2 présentent une série d'ouvertures 9.

De façon propre à l'invention, un profilé 10 en matière isolante est chaussé de la glissière 2 de façon à être coaxial à cette dernière. Dans la forme de réalisation de l'invention représentée aux figures 1 à 4, le profilé 10 est placé à l'extérieur de la glissière 2.

Le profilé 10 présente une section transversale qui suit sensiblement celle de la glissière 2, de sorte qu'il peut venir épouser celle-ci.

Ainsi le profilé 10 comprend une semelle 12 et deux parois latérales 13.

Le profilé 10 est réalisé dans une matière qui assure une isolation électrique. Il peut être ainsi réalisé par extrusion en matière plastique.

Comme on peut le voir sur la figure 1, le profilé 10 isolant est doté de deux logements symétriques dans chacun desquels est insérée une piste 14 conductrice. Par piste conductrice, on entend une bande de matériau conducteur tel que, par exemple, du cuivre.

Le profilé 10 isolant présente également des ouvertures 18 qui correspondent à celles prévues dans la semelle 3 de la glissière 2 de façon à ne pas gêner la fixation sur le véhicule.

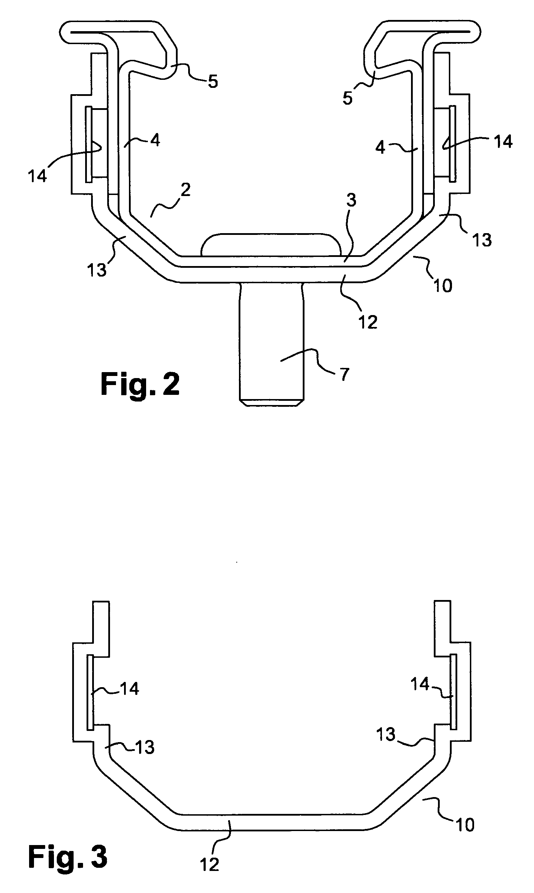

On peut voir, en perspective, à la figure 2 le profilé 10 isolant indépendamment de la glissière 2.

On note sur cette figure la présence d'ouvertures dans la semelle 3 du profilé 10 isolant ainsi que la présence de deux pistes 14 conductrices.

Outre sa fonction d'électrification, le système intègre un mécanisme d'ancrage qui présente les fonctions usuelles d'ancrage d'un siège dans la glissière 2 et de réglage de la position longitudinale du siège par rapport à la glissière 2.

Pour cela, comme cela est représenté sur la figure 1, le mécanisme d'ancrage possède des verrous 16 qui sont mobiles entre une position rétractée qui permet au mécanisme d'ancrage d'entrer ou de sortir de la glissière 2 et une position d'engagement dans laquelle le verrou 16 est en appui contre l'aile d'ancrage 5 et/ou engagé dans une des ouvertures 9 prévues dans les parois latérales de la glissière 2.

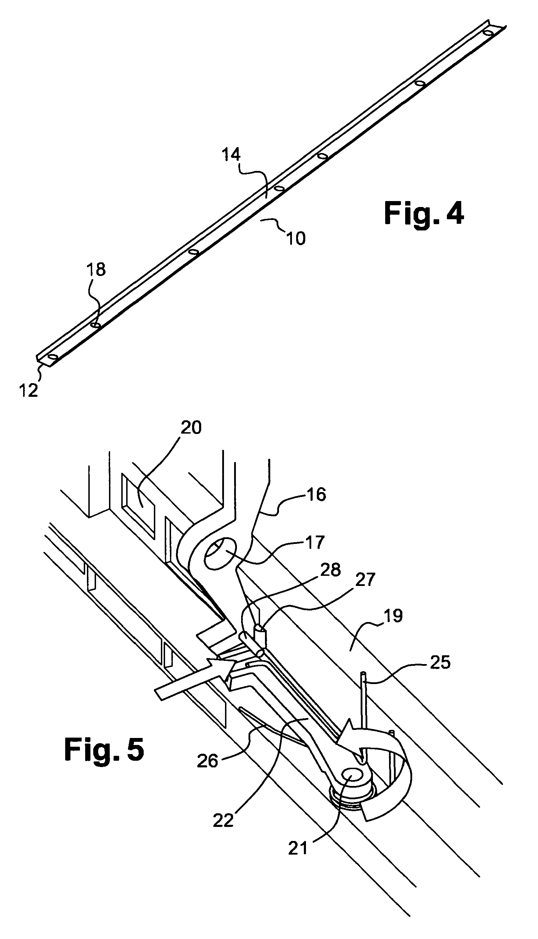

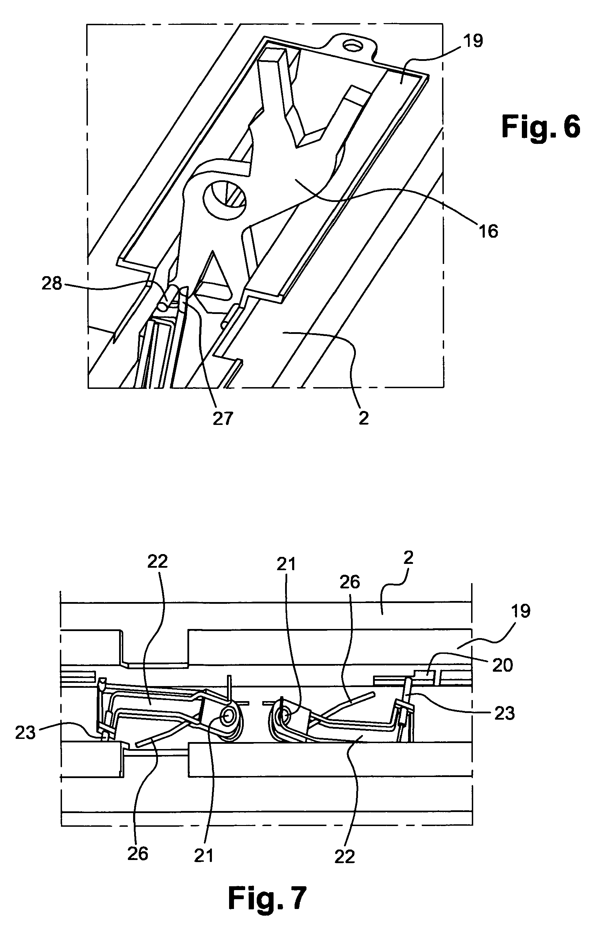

Les figures 5 et 6 représentent un verrou 16 d'ancrage dont on peut voir une partie d'ancrage 16a et une partie de commande 16b séparées entre elles par un perçage circulaire 17.

Cela n'est pas représenté sur ces figures mais le trou circulaire est destiné à recevoir un axe de montage par rapport auquel le verrou 16 pivote.

Le verrou 16 pivote sous l'action d'un actionneur qui n'est pas non plus représenté et qui agit sur la queue de commande.

L'arbre de montage ainsi qu'une cinématique qui permet d'actionner le ou les verrous 16 d'ancrage sont rangés dans un boîtier 18 que l'on peut voir à la figure 1.

Lié au boîtier 18, le mécanisme d'ancrage comprend également un carter 19 en matière plastique isolante.

Le carter 19, qui présente une section transversale en forme générale de U, est dimensionné pour pouvoir pénétrer dans la glissière 2.

Le carter 19 est, par ailleurs, pourvu de fenêtres 20 que l'on peut voir notamment à la figure 5.

Ce carter 19 isolant reçoit un pivot 21 sur lequel est monté un support mobile 22. On peut se reporter à la figure 4 ou à la figure 5 pour voir le support mobile 22 en perspective.

La figure 5 fait apparaître le fait qu'il peut être prévu deux supports mobiles 22 disposés de manière successive.

A l'extrémité de chacun de ces supports mobiles 22, on note la présence d'un doigt 23. Le doigt 23 est un élément métallique conducteur qui peut être en cuivre par exemple. Le doigt 23 est relié de manière fixe sur le support mobile 22. Un conducteur 25 électrique filaire relie le doigt 23 à un ou plusieurs organes du siège qui nécessitent une alimentation électrique.

Au niveau du pivot 21, le support mobile 22 est sollicité par un ressort 26 en épingle qui agit de manière à faire pivoter le support mobile 22 pour que le doigt 23 métallique sorte d'une des fenêtres 20 prévues dans le carter 19 isolant.

La figure 7 montre que les deux supports mobiles 22 sont montés en opposition en ce sens qu'ils agissent chacun de sorte à faire dépasser leur doigt 23 métallique de part et d'autre du carter 19 isolant.

En se reportant à la figure 5, on peut voir que le support mobile 22 est doté d'un pion 27 contre lequel s'appuie une tige 28 qui est embarquée sur le verrou 16.

La figure 5 montre le verrou 16 en position rétractée ; dans cette position, la tige 28 du verrou 16 pousse le pion 27, et donc le support mobile 22 lui-même, contre l'action du ressort 26 en épingle de manière à ce que le support mobile 22 soit lui-même dans une position rétractée.

En revanche, dès que le verrou 16 sous l'action de son actionneur prend sa position d'ancrage, et donc subit une rotation qui le fait sortir du carter 19 en matière plastique, le support mobile 22 pivote ce qui fait sortir le doigt 23 du carter 19.

C'est ainsi que le doigt 23 conducteur vient assurer le contact avec la piste 14 conductrice qui se trouve dans le profilé 10 isolant.

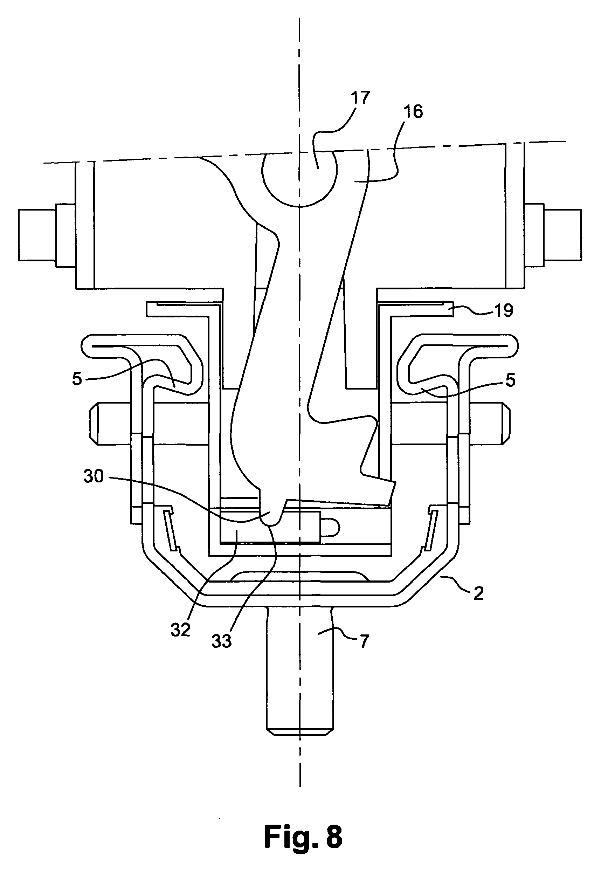

La figure 8 montre une variante de réalisation du système selon l'invention dans lequel le profilé 10 isolant ne se trouve pas à l'extérieur de la glissière 2 mais est engagé à l'intérieur de celle-ci.

Comme on peut le voir sur cette figure, le profilé 10 isolant épouse la forme de la semelle 3 ainsi que la partie inférieure des parois latérales.

On retrouve dans cette forme de réalisation les deux pistes 14 conductrices.

Comme on peut le voir sur cette figure, il est prévu que le verrou 16 soit doté d'un téton 30 dont l'extrémité est arrondie. Le téton 30 vient s'engager dans un support mobile 22 avec les jeux fonctionnels nécessaires.

Le support mobile 22 présente une concavité 33 dont la géométrie est complémentaire de celle du téton 30, de telle sorte que la rotation du verrou 16 entraîne un déplacement du support mobile 22. Le support mobile 22 est entrainé en rotation avec le déplacement du verrou 16. Lors du déplacement du verrou 16 entre la position rétractée (illustrée à la figure 8) et sa position d'engagement, le support mobile 22 qui est assujetti au verrou se déplace entre une position rétractée (illustrée à la figure 8) et une position de contact électrique dans laquelle le doigt vient s'appuyer sur la piste 14 conductrice.

Le déplacement du support mobile 22 est entièrement piloté par le verrou 16.

Dans ses deux formes de réalisation qui viennent d'être décrites, il apparaît que l'invention fournit un système qui permet de réaliser une connexion électrique entre un véhicule et un siège amovible et dont la position longitudinale peut être réglée.

La connexion électrique ainsi réalisée est automatique puisqu'elle ne requiert aucune manipulation de la part de l'utilisateur. Dans le système selon l'invention, la connexion électrique entre le circuit électrique du véhicule est calquée sur un mouvement des verrous 16 d'ancrage.

Cette connexion électrique est donc sûre et est adaptée à des sièges qui peuvent se déplacer sur des glissières 2 de grande longueur. On ne relève en effet aucune limitation quant à la longueur des glissières 2.

Bien entendu, l'invention n'est pas limitée aux formes de réalisation décrites ci-dessus mais au contraire elle en embrasse toutes les formes de réalisation. Il convient de noter que le mécanisme d'ancrage n'est pas limité à celui décrit en référence aux figures. L'invention peut être mise en oeuvre avec d'autres mécanismes d'ancrage.

## Revendications

1. Système de fixation amovible et ajustable et d'électrification d'un siège de véhicule embarquant un ou plusieurs organes électriques dans un véhicule automobile incorporant un circuit électrique, le système de fixation comprenant :
- une glissière (2) fixée à la structure du véhicule présentant une semelle (3) de laquelle partent deux parois latérales (4) surmontées chacune d'une aile d'ancrage (5),
- un mécanisme d'ancrage comprenant au moins un verrou (16) mobile entre une position rétractée permettant son introduction dans la glissière (2) et pouvant être déverrouillé pour enlever le siège du véhicule, **caractérisé en ce qu'**il comprend :
- un profilé (10) coaxial de la glissière (2), en matière isolante incorporant au moins une piste (14) conductrice pouvant être reliée au circuit électrique du véhicule et
- un doigt (23) conducteur embarqué sur un support mobile entre une position rétractée et une position de contact électrique avec une piste (14), le support mobile (22) étant commandé par un verrou (16) de sorte que l'engagement du verrou (16) dans la glissière (2) entraîne l'extraction du doigt (23) pour le mettre en contact électrique avec la piste (14) et la rétraction du verrou (16) entraîne la rétraction du doigt (23) pour rompre le contact électrique avec la piste (14).

2. Système selon la revendication 1, **caractérisé en ce que** le profilé (10) présente une première et une deuxième pistes conductrices (14) disposées le long de chaque paroi latérale de la glissière (2) et,
**en ce que** le mécanisme d'ancrage comprend un carter (19) équipé de moyens de guidage de deux supports mobiles (22) ayant chacun un doigt (23) permettant de faire sortir un premier doigt d'un côté du carter pour entrer en contact avec la première piste et un second doigt pour entrer en contact avec la deuxième piste.

3. Système selon la revendication 1 ou la revendication 2, **caractérisé en ce que** le profilé (10) est disposé sur la face extérieure de la glissière (2).

4. Système selon l'une des revendications 1 à 2, **caractérisé en ce que** le profilé est disposé sur la face intérieur de la glissière (2).

5. Système selon l'une des revendications 2 à 4, **caractérisé en ce que** les moyens de guidage assurent une liaison pivot du support (22) par rapport au carter (19).

6. Système selon la revendication 5, **caractérisé en ce que** le carter (19) comprend un pivot (21) sur lequel est monté un support (22).

7. Système selon l'une des revendications 1 à 6, **caractérisé en ce qu'**au moins un verrou (16) présente un téton (30) qui est engagé dans une concavité (33) pratiquée dans le support.

8. Système selon l'une des revendications 1 à 7, **caractérisé en ce que** le support (22) est équipé d'un pion (27) contre lequel s'appuie une tige (28) embarquée sur le verrou (16).

9. Système selon la revendication 8, **caractérisé en ce que** le support (22) est poussé par un élément élastique tel qu'un ressort contre le verrou (16).

## Claims

1. A system for the removable and adjustable fixing and electrification of a vehicle seat having one or more electric members, in a motor vehicle incorporating an electric circuit, the fixing system comprising:
- a slide (2) fixed to the structure of the vehicle having a base (3) from which there extend two side walls (4) each surmounted by an anchoring wing (5);
- an anchor mechanism comprising at least one bolt (16) mobile between a retracted position allowing its insertion in the slide (2) and able to be unbolted to remove the seat from the vehicle, **characterized in that** it comprises:
- a profiled section (10) coaxial to the slide (2) in insulating material incorporating at least one conductive path (14) able to be connected to the electric circuit of the vehicle; and
- a conductive finger (23) mounted on a mobile support between a retracted position and an electric contact position with a conductive path (14), the mobile support (22) being controlled by a bolt (16) so that the engaging of the bolt (16) in the slide (2) causes extraction of the finger (23) to place it in electric contact with the conductive path (14) and the retraction of the bolt (16) causes retraction of the finger (23) to break the electric contact with the conductive path (14).

2. The system according to claim 1 **characterized in that** the profiled section (10) has a first and a second conductive path (14) arranged along each side wall of the slide (2) and,
**in that** the anchor mechanism comprises a casing (19) equipped with means for guiding two mobile supports (22) each having a finger (23) allowing a first finger to be caused to emerge from one side of the casing to enter into contact with the first conductive path and a second finger to enter into contact with the second conductive path.

3. The system according to claim 1 or claim 2, **characterized in that** the profiled section (10) is arranged on the outer side of the slide (2).

4. The system according to one of claims 1 to 2, **characterized in that** the profiled section is arranged on the inner side of the slide (2).

5. The system according to one of claims 2 to 4, **characterized in that** the guiding means ensure a pivot connection of the support (22) relative to the casing (19).

6. The system according to claim 5, **characterized in that** the casing (19) comprises a pivot (21) on which a support (22) is mounted.

7. The system according to one of claims 1 to 6, **characterized in that** at least one bolt (16) has a stud (30) which is engaged in a concavity (33) made in the support.

8. The system according to one of claims 1 to 7, **characterized in that** the support (22) is equipped with a pin (27) on which there bears a rod (28) mounted on the bolt (16).

9. The system according to claim 8, **characterized in that** the support (22) is pushed by an elastic element such as a spring against the bolt (16).

## Patentansprüche

1. Demontierbares und verstellbares Befestigungssystem und Elektrifizierungssystem eines Fahrzeugsitzes mit einem oder mehreren eingebauten elektrischen Organen in einem Kraftfahrzeug, mit einem elektrischen Kreis, wobei das Befestigungssystem umfasst:
- eine an der Fahrzeugstruktur befestigte Gleitschiene (2), die eine Sohle (3) aufweist, von der zwei Seitenwände (4) abgehen, über denen jeweils ein Verankerungsflügel (5) steht,
- einen Verankerungsmechanismus, der mindestens einen zwischen einer zurückgezogenen Stellung, die sein Einführen in die Gleitschiene (2) erlaubt, beweglichen Riegel (16) umfasst, der entriegelbar ist, um den Fahrzeugsitz zu entfernen,
**dadurch gekennzeichnet, dass** es umfasst:
- ein koaxiales Profil (10) der Gleitschiene (2) aus isolierendem Material mit mindestens einer leitenden Bahn (14), die mit dem elektrischen Kreis des Fahrzeugs verbindbar ist, und
- einen leitenden Finger (23), der auf einem Halter eingebaut ist, der zwischen einer zurückgezogenen Stellung und einer elektrischen Kontaktstellung mit einer Bahn (14) bewegbar ist, wobei der bewegbare Halter (22) von einem Riegel (16) derart gesteuert wird, dass das Eingreifen des Riegels (16) in die Gleitschiene (2) zum Herausziehen des Fingers (23) führt, um ihn mit der Bahn (14) in elektrischen Kontakt zu versetzen und das Zurückziehen des Riegels (16) zum Zurückziehen des Fingers (23) führt, um den elektrischen Kontakt mit der Bahn (14) zu unterbrechen.

2. System nach Anspruch 1, **dadurch gekennzeichnet, dass** das Profil (10) eine erste und eine zweite leitende Bahn (14) aufweist, die entlang jeder Seitenwand der Gleitschiene (2) angeordnet sind, und
dass der Verankerungsmechanismus ein Gehäuse (19) aufweist, das mit Führungsmitteln von zwei bewegbaren Haltern (22) ausgestattet ist, die jeweils einen Finger (23) haben, die es erlauben, einen ersten Finger auf der einen Seite des Gehäuses auszufahren, um mit der ersten Bahn in Kontakt zu treten, und einen zweiten Finger, um mit der zweiten Bahn in Kontakt zu treten.

3. System nach Anspruch 1 oder Anspruch 2, **dadurch gekennzeichnet, dass** das Profil (10) auf der Außenseite der Gleitschiene (2) angeordnet ist.

4. System nach einem der Ansprüche 1 bis 2, **dadurch gekennzeichnet, dass** das Profil auf der Innenseite der Gleitschiene (2) angeordnet ist.

5. System nach einem der Ansprüche 2 bis 4, **dadurch gekennzeichnet, dass** die Führungsmittel eine Drehverbindung des Halters (22) im Verhältnis zum Gehäuse (19) gewährleisten.

6. System nach Anspruch 5, **dadurch gekennzeichnet, dass** das Gehäuse (19) einen Drehzapfen (21) umfasst, auf dem ein Halter (22) montiert ist.

7. System nach einem der Ansprüche 1 bis 6, **dadurch gekennzeichnet, dass** mindestens ein Riegel (16) einen Ansatz (30) aufweist, der in eine in den Halter eingearbeitete Konkavität (33) eingreift.

8. System nach einem der Ansprüche 1 bis 7, **dadurch gekennzeichnet, dass** der Halter (22) mit einem Stift (27) ausgestattet ist, auf dem sich eine in dem Riegel (16) eingebaute Stange (28) abstützt.

9. System nach Anspruch 8, **dadurch gekennzeichnet, dass** der Halter (22) von einem elastischen Element wie eine Feder gegen den Riegel (16) gedrückt wird.
